(19)

Europäisches Patentamt
European Patent Office
Office européen des brevets

(11) **EP 4 432 397 A1**

(12) **EUROPEAN PATENT APPLICATION**

(43) Date of publication:
**18.09.2024 Bulletin 2024/38**

(21) Application number: **23194174.1**

(22) Date of filing: **30.08.2023**

(51) International Patent Classification (IPC):
**H01M 4/485** (2010.01)    **H01M 4/131** (2010.01)
**H01M 4/1391** (2010.01)    **H01M 10/0525** (2010.01)
**H01M 4/04** (2006.01)    **H01M 4/505** (2010.01)
**C01G 33/00** (2006.01)    H01M 4/02 (2006.01)

(52) Cooperative Patent Classification (CPC):
**C01G 33/00; C01G 33/006; H01M 4/0404;**
**H01M 4/131; H01M 4/1391; H01M 4/485;**
**H01M 4/505; H01M 10/0525;** H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **17.03.2023 JP 2023043293**

(71) Applicant: **KABUSHIKI KAISHA TOSHIBA**
**Minato-ku**
**Tokyo 105-0023 (JP)**

(72) Inventors:
• **HARADA, Yasuhiro**
  **Minato-ku, Tokyo, 105-0023 (JP)**

• **ISE, Kazuki**
  **Minato-ku, Tokyo, 105-0023 (JP)**
• **YAMASHITA, Yasunobu**
  **Minato-ku, Tokyo, 105-0023 (JP)**
• **UEDA, Kakuya**
  **Minato-ku, Tokyo, 105-0023 (JP)**
• **MURATA, Yoshiaki**
  **Minato-ku, Tokyo, 105-0023 (JP)**
• **TAKAMI, Norio**
  **Minato-ku, Tokyo, 105-0023 (JP)**

(74) Representative: **Hoffmann Eitle**
**Patent- und Rechtsanwälte PartmbB**
**Arabellastraße 30**
**81925 München (DE)**

(54) **ACTIVE MATERIAL, ELECTRODE, SECONDARY BATTERY, BATTERY PACK, AND VEHICLE**

(57)    According to one approach, an active material including a niobium-titanium oxide phase having a monoclinic structure is provided. The niobium-titanium oxide phase has a crystal structure that includes in a crystal lattice thereof, at least one per unit lattice of a $(Nb, Ti)O_6$ octahedron site composed only with vertex-sharing, a bond angle distortion in the octahedron site being 0.8 $\sigma^2/deg^2$ or less. A crystallite diameter of the niobium-titanium oxide phase is in a range from 85 nm or greater to 130 nm or less.

F I G. 3

**Description**

FIELD

Approaches described herein relate generally to an active material, electrode, secondary battery, battery pack, and vehicle.

BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are anticipated as a power source for vehicles such as hybrid electric automobiles, electric automobiles, an uninterruptible power supply for base stations for portable telephones, or the like. Therefore, the secondary battery is demanded to, in addition to having a high energy density, be excellent in other performances such as rapid charge-discharge performances and long-term reliability, as well. For example, not only is the charging time remarkably shortened in a secondary battery capable of rapid charge and discharge, but the battery is also capable of improving motive performances in vehicles such as hybrid electric automobiles, and efficient recovery of regenerative energy of motive force.

In order to enable rapid charge/discharge, electrons and lithium ions must be able to migrate rapidly between the positive electrode and the negative electrode. However, when a battery using a carbon-based negative electrode is repeatedly subjected to rapid charge and discharge, precipitation of dendrite of metallic lithium on the electrode may sometimes occur, raising concern of heat generation or ignition due to internal short circuits.

In light of this, a battery using a metal composite oxide in a negative electrode in place of a carbonaceous material has been developed. In particular, in a battery using an oxide of titanium in the negative electrode, rapid charge and discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium for the negative electrode has a problem that the energy density is low.

For example, an electrode potential of an oxide of titanium is about 1.5 V (vs. Li/Li$^+$) with respect to metallic lithium electrode, which is higher (more noble) compared to potentials of a carbon-based negative electrodes. The potential of an oxide of titanium is electrochemically restricted due to being caused by oxidation-reduction reactions between Ti$^{3+}$ and Ti$^{4+}$ upon insertion and extraction of lithium. In addition, there is also a fact that rapid charge and discharge of lithium ions can be stably performed at a high electrode potential of about 1.5 V (vs. Li/Li$^+$). Therefore, it has been conventionally difficult to reduce the electrode potential in order to improve the energy density.

On one hand, considering the capacity per unit weight, the theoretical capacity of titanium dioxide (anatase structure) is about 165 mAh/g, and the theoretical capacity of spinel lithium-titanium composite oxides such as $Li_4Ti_5O_{12}$ (TLO) is about 180 mAh/g. On the other hand, the theoretical capacity of a general graphite based electrode material is 385 mAh/g and greater. As such, the capacity density of an oxide of titanium is significantly lower than that of the carbon based negative electrode material. This is due to there being few lithium-insertion sites in the crystal structure, and lithium tending to be stabilized in the structure, and thus, substantial capacity being reduced.

In view of the above circumstances, a new electrode material containing Ti and Nb has been studied. Such a niobium-titanium oxide material is expected to have a high charge/discharge capacity. In particular, an oxide represented by $TiNb_2O_7$ (TNO) has a high theoretical capacity exceeding 380 mAh/g. Therefore, the niobium-titanium oxide is anticipated as a high-capacity material in place of $Li_4Ti_5O_{12}$.

BRIEF DESCRIPTION OF THE DRAWINGS

FIG. 1 is a schematic view illustrating a crystal structure of a niobium-titanium oxide $Nb_2TiO_7$.
FIG. 2 is a schematic view of the crystal structure of FIG. 1 observed from another direction.
FIG. 3 is a schematic view illustrating only a part of the crystal structure shown in FIG. 1.
FIG. 4 is a graph showing results of Rietveld analysis using a synchrotron radiation X-ray diffraction pattern of an example of an active material according to an approach.
FIG. 5 is a cross-sectional view schematically showing an example of a secondary battery according to an approach.
FIG. 6 is an enlarged cross-sectional view of section A of the secondary battery shown in FIG. 5.
FIG. 7 is a partially cut-out perspective view schematically showing another example of the secondary battery according to an approach.

FIG. 8 is an enlarged cross-sectional view of section B of the secondary battery shown in FIG. 3.

FIG. 9 is a perspective view schematically showing an example of a battery module according to an approach.

FIG. 10 is an exploded perspective view schematically showing an example of a battery pack according to an approach.

FIG. 11 is a block diagram showing an example of an electric circuit of the battery pack shown in FIG. 10.

FIG. 12 is a partially see-through diagram schematically showing an example of a vehicle according to an approach.

FIG. 13 is a diagram schematically showing an example of a control system related to an electric system in the vehicle according to an approach.

DETAILED DESCRIPTION

According to one approach, an active material including a niobium-titanium oxide phase having a monoclinic structure is provided. The niobium-titanium oxide phase has a crystal structure that includes in a crystal lattice thereof, at least one per unit lattice of a $(Nb, Ti)O_6$ octahedron site composed only with vertex-sharing, a bond angle distortion in the octahedron site being 0.8 $\sigma^2/deg^2$ or less. A crystallite diameter of the niobium-titanium oxide phase is in a range from 85 nm or greater to 130 nm or less.

According to another approach, provided is an electrode including the active material according to the above approach.

According to still another approach, provided is a secondary battery including a positive electrode, a negative electrode, and an electrolyte is provided. The negative electrode includes the electrode according to the above approach.

According to yet another approach, provided is a battery pack including secondary battery (s) . The secondary battery (s) of the battery pack include the secondary battery according to the above approach.

According to still yet another approach, provided is a vehicle including the battery pack according to the above approach.

According to the above approaches, there can be realized an active material and electrode that can realize a secondary battery exhibiting excellent charge-discharge efficiency and cycle life performance, a secondary battery and battery pack exhibiting excellent charge-discharge efficiency and cycle life performance, and a vehicle equipped with the battery pack.

TNO exhibits a potential curve with a larger slope at the time of charging and discharging, as compared to TLO. In a battery using TNO in a negative electrode, a trend has been observed where the positive electrode potential rises, although at a miniscule level, due to a shift in operation window, whereby cycle life degrades rapidly. The shift in operation window occurs due to insertion and extraction of Li ions inside the TNO particles not taking place smoothly, whereby Li are left remaining inside the lattice and thus degrading charge-discharge efficiency.

Hereinafter, approaches will be described with reference to the drawings. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in an actual device; they can however be appropriately design-changed, taking into account the following explanations and known technology.

(First Approach)

According to a first approach, an active material is provided. The active material includes a niobium-titanium oxide phase having a monoclinic structure. In the crystal structure, a crystal lattice thereof includes at least one $NbO_6/TiO_6$ octahedron site composed only with vertex-sharing, where a bond angle distortion in the octahedron site is 0.8 $\sigma^2/deg^2$ or less in each unit lattice. The niobium-titanium oxide phase has a crystallite diameter of 85 nm to 130 nm.

This active material was obtained as a result of focusing on $(Nb, Ti)O_6$ octahedron distortion, in an attempt to achieve smooth insertion and extraction of Li ions inside TNO particles. With a conventional synthesis and grinding method, the bond angle distortion (bond angle dispersion) of vertex-sharing octahedrons becomes greater than 0.8; this gave an implication that the in-lattice diffusion of Li ions may be inhibited, making charge-discharge efficiency low. As one measure under such a circumstance, damage to particle surfaces caused by grinding was minimized by using a thin-film spin system high-speed mixer. As a result, the bond angle distortion was greatly mitigated, and improvement in charge-discharge efficiency and cell life had become possible.

For the niobium-titanium oxide phase obtained by synthesis, the crystallite diameter is 85 nm or greater and 130 nm or less. With a niobium-titanium oxide phase having a crystallite diameter that falls within this range, it is possible to provide an active material in which Li ions can move easily within the crystal lattice during charging and discharging and which has excellent cycle life. If the crystallite diameter is 85 nm or smaller, the capacity becomes smaller and the cycle life becomes shorter. If the crystallite diameter is 130 nm or greater, the particle diameter would be too coarse so that the diffusion distance of lithium ions would be longer, and therefore, the rate performance would be degraded.

The $Nb_2TiO_7$ phase will be described. The $Nb_2TiO_7$ phase may be, for example, represented by general formula $Nb_{2-x}M1_xTi_{1-y}M2_yO_7$. Here, M1 and M2 include at least one selected from the group consisting of K, Zr, Sn, V, Ta, Mo, W, P, Y, Fe, Co, Cr, Mn, Ni, and Al. M1 and M2 may be the same or be different from one another. Subscripts x and y respectively fall within a range of $0 \leq x < 2$ and $0 \leq y < 1$. Subscript x is preferably 1 or less, and subscript x is more preferably 0.5 or less. The composition in the case where Li is inserted into $Nb_2TiO_7$ phase may be represented by $Li_aNb_{2-x}M1_xTi_{1-y}M2_yO_7$. Here, subscripts x and y are as described above, and subscript a falls within a range of $0 \leq a \leq 5$.

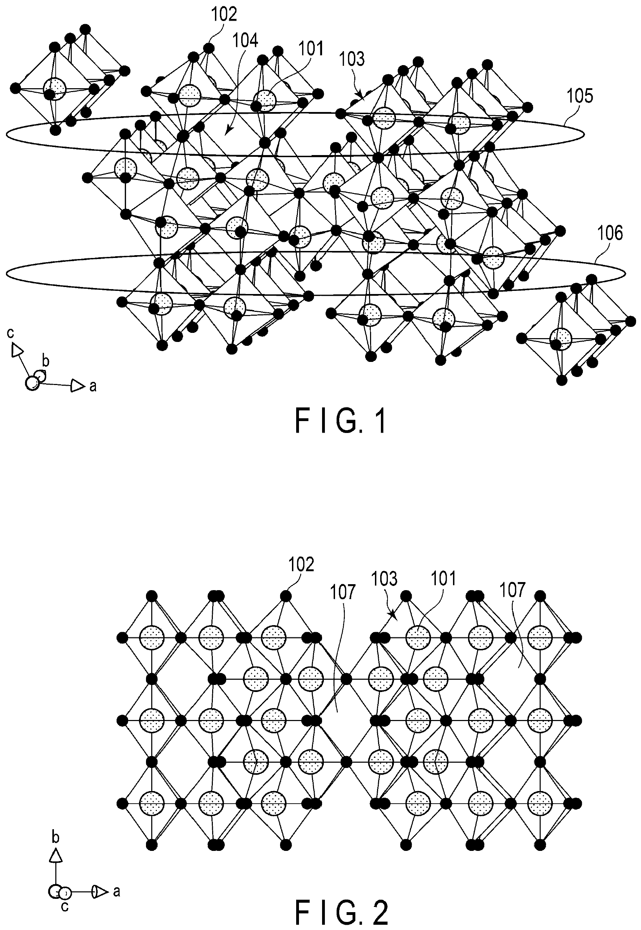

As an example of a monoclinic crystal structure that the niobium-titanium oxide phase has, FIGS. 1 to 3 show schematic diagrams of a crystal structure of monoclinic $Nb_2TiO_7$ having a symmetry of a space group C2/m. The space group C2/m herein refers to symmetry of a space group number 12 described in the International Tables for Crystallography, specifically vol. A: Space-group symmetry (second online version (2016); ISBN: 978-0-470-97423-0, doi: 10.1107/97809553602060000114) of the document.

As illustrated in FIG. 1, in the crystal structure of monoclinic $Nb_2TiO_7$, a metal ion 101 and an oxide ion 102 form octahedra 103 that function as a frame structure of the crystal structure. At a position of the metal ion 101, Nb ions and Ti ions are arranged randomly at a ratio of Nb : Ti = 2 : 1. Such octahedra 103 are alternately arranged three-dimensionally, whereby vacancies 104 are formed among the octahedra 103. These vacancies 104 serve as hosts for lithium ions. From 0 moles up to a maximum of 5.0 moles of lithium ions can be inserted into this crystal structure. Therefore, the composition when 0 to 5.0 moles of lithium ions are inserted can be expressed as $Li_aNb_2TiO_7$ ($0 \leq a \leq 5$).

In FIG. 1, regions 105 and 106 are sections having two-dimensional channels in [100] and [010] directions. As illustrated in FIG. 2, the crystal structure of monoclinic $Nb_2TiO_7$ has a vacancy 107 along a [001] direction. This vacancy 107 has a tunnel structure advantageous in conduction of lithium ions and serves as an electrically conductive path in a [001] direction connecting region 105 and region 106. The presence of the electrically conductive path makes migration of lithium ions between regions 105 and 106 possible. Further, the niobium-titanium oxide has a lithium insertion potential of about 1.5 V (vs. Li/Li$^+$). Therefore, an electrode including the niobium-titanium oxide as the active material can realize a battery that can stably repeat rapid charging and discharging.

Moreover, when a lithium ion is inserted into the vacancy 104 in the above crystal structure, the metal ion 101 forming the framework is reduced to a trivalent, thereby maintaining electric neutrality of the crystal. In the niobium-titanium oxide, not only does a Ti ion become reduced from tetravalent to trivalent, but also an Nb ion is reduced from pentavalent to trivalent. Therefore, the number of reduced valences per active material weight is large. Thus, the electrical neutrality of the crystal can be maintained even if many lithium ions are inserted. Therefore, energy density is higher in the niobium-titanium oxide as compared to that of a compound such as titanium oxide only containing a tetravalent cation.

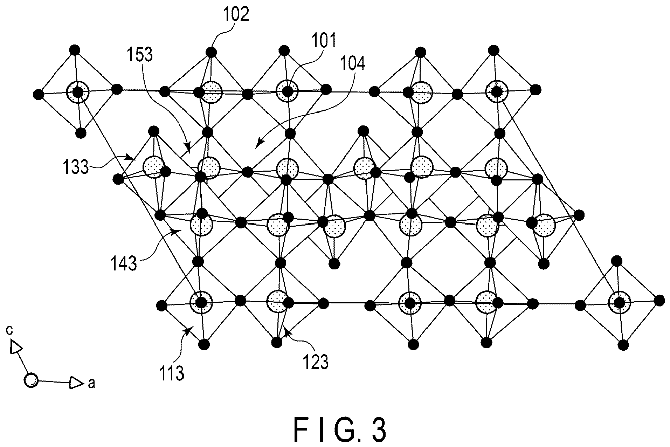

FIG. 3 shows a schematic diagram of just the two rows of octahedrons on the forehand side (the (101) plane side) in the crystal structure of FIG. 1. Of the sites of the metal ions 101 (Nb ions and Ti ions), for the octahedron 113 composed centered on the 2a sites, the sharing of oxide ions 102 with the neighboring octahedron 123 and octahedron 143 is composed only by vertex-sharing. Of the plural octahedrons composed centered on the 4i sites, for the octahedron 123, as well, the sharing of oxide ions 102 with other octahedrons is composed only by vertex-sharing. In contrast, the octahedrons 133, 143, and 153 share oxide ions 102 by edge-sharing. The 2a site and the 4i site herein refer to the metallic ion sites of symmetry described in the above-mentioned International Tables, volume A.

Next, the $Nb_{10}Ti_2O_{29}$ phase will be described. The composition of the $Nb_{10}Ti_2O_{29}$ phase can be represented by, for example, general formula $Nb_{10-z}M1_zTi_{2-y}M2_yO_{29}$. Here, M1 and M2 are the same as that for the $Nb_2TiO_7$ phase. Subscript z falls within a range of $0 \leq z \leq 5$, and subscript y falls within a range of $0 \leq y < 1$. The composition in the case where Li is inserted into $Nb_{10}Ti_2O_{29}$ phase may be represented by $Li_bNb_{10-z}M1_zTi_{2-y}M2_yO_{29}$. Here, subscripts z and y are as described above, and subscript b falls within a range of $0 \leq b \leq 22$.

The basic frame structure the $Nb_{10}Ti_2O_{29}$ phase is similar to the crystal structure of the monoclinic $Nb_2TiO_7$ illustrated in FIGS. 1 to 3. However, while the space group C2/M is the typical representative of the $Nb_2TiO_7$ phase, there has been reported a classification of a unit cell to space group A2/m. When a lithium ion is inserted into the vacancy 104, the metal ion 101 composing the framework is reduced to trivalent, thereby maintaining electrical neutrality of a crystal. The composition when lithium ions are inserted into the $Nb_{10}Ti_2O_{29}$ phase can be expressed as $Li_xNb_{10}Ti_2O_{29}$ ($0 \leq x \leq 22$).

As a monoclinic niobium-titanium oxide phase, a $Nb_{14}TiO_{37}$ phase and a $Nb_{24}TiO_{64}$ phase are known, in addition to the $Nb_2TiO_7$ phase and $Nb_{10}Ti_2O_{29}$ phase described above. The crystal lattice of the $Nb_{14}TiO_{37}$ phase and the $Nb_{24}TiO_{64}$ phase do not include any (Nb, Ti)$O_6$ octahedron site composed only with vertex-sharing. In the crystal lattice, portions in the periphery of the octahedron site with only vertex-sharing has a higher flexibility compared to the periphery of octahedron sites that include other types of sharing, such as edge-sharing. Thus, in a $Nb_2TiO_7$ phase or a $Nb_{10}Ti_2O_{29}$ phase that includes at least one octahedron site with only vertex-sharing per unit lattice, insertion and extraction of Li ions is easy, and therefore charge-discharge efficiency and cycle life performance are excellent.

The form of the active material (niobium-titanium oxide) according to the approach is not limited to any in particular. The active material may include particles that include the niobium-titanium oxide phase or particles composed of the niobium-titanium oxide phase. The active material may have, for example, a form of a primary particle that includes the $Nb_2TiO_7$ phase and/or the $Nb_{10}Ti_2O_{29}$ phase, together with another phase in addition to such a single or mixed phase of niobium-titanium oxide phase. Alternatively, the active material may be a plurality of particles in which primary particles composed solely of the $Nb_2TiO_7$ phase and primary particles composed solely of the $Nb_{10}Ti_2O_{29}$ phase are mixed, or a mixture of at least one of these single-phase primary particles and primary particles of another phase. Each of the aforementioned primary particles may be agglomerated into a form of a secondary particle. The particles of a niobium-titanium oxide phase may be a mixture of primary particles and secondary particles.

An average particle size of the primary particles of the niobium-titanium oxide phase is preferably within the range of 0.1 um or greater and 10 $\mu$m or less. The average particle size herein refers to a particle size $D_{50}$ at which the volume cumulative frequency from the smaller particle size side reaches 50%, in a particle size distribution chart obtained by a laser diffraction scattering method, which is described later. The particle size distribution chart may correspond to a histogram of an active material sample.

The particles of the niobium-titanium oxide phase may have a carbon-containing layer on a surface thereof. The carbon-containing layer may be attached to the surface of the primary particles or may be attached to the surface of the secondary particles. Alternatively, the particles of the niobium-titanium oxide phase may contain secondary particles formed by agglomeration of primary particles having a carbon-containing layer attached on surfaces thereof. Such secondary particles can exhibit excellent electrical conductivity since carbon is present among the primary particles. The mode including such secondary particles is preferable since an electrode using the active material can exhibit a lower resistance.

<Method of Producing Active Material>

The active material according to the approach can be produced by, for example, a synthesis method described below.

First, starting materials are mixed. As starting materials including niobium and titanium, oxides or salts including Nb and Ti are prepared. For example, $Nb_2O_5$ particles and TiOa particles can be used as starting materials. These starting materials are mixed in accordance with the composition of the target niobium-titanium oxide phase.

A mixture of raw materials is charged into pure water and mixed by a wet bead mill apparatus for 1 hour to 3 hours. At this time, various dispersion agents may be used so as to achieve good dispersion. The obtained slurry mixture is subjected to granulation drying in a spray dryer apparatus. At this time, the drying is performed in such a manner that a particle size of the granulated product would be about 5 $\mu$m to 30 $\mu$m. With a particle size of 5 $\mu$m or greater, progress of aggregation can be suppressed at the time of synthesis reaction. With a particle size of 30 um or less, thin-film spin grinding performed later can be easily carried out.

Next, pre-firing (first firing) is performed on the obtained agglomerated matter. Pre-firing is preferably performed at a temperature between 600°C and 1100°C for 1 hour to 12 hours. By pre-firing, impurity components (for example, water and organic matter) adsorbed to the raw materials can be removed. Pre-firing may be omitted.

Main firing (second firing) is preferably performed at a temperature between 900°C and 1200°C for 1 hour to 10 hours. Main firing is more preferably performed at a temperature between 950°C and 1050°C for 2.5 hours to 3.5 hours.

The obtained fired granulated matter is subjected to grinding using a thin film spin system mixer. Grinding conditions are set in such a manner that a targeted average particle size ($D_{50}$) is 0.1 um or greater and 10 $\mu$m or less.

<Crystal Structure Measurement>

The crystal structure included in the active material can be examined by synchrotron radiation X-ray measurement and Rietveld refinement performed on the measurement result. As facilities for synchrotron radiation X-ray measurement, BL19B2 at the large-scale synchrotron radiation facility SPring-8, which is operated by the Institute of Physical and Chemical Research of Japan (RIKEN), can be used.

An active material sample is charged into a Lindemann glass ($\varphi$ = 0.3 mm), and measured with a wavelength of 0.8 Å. Rietveld refinement is performed using measurement data. In the Rietveld method, a diffraction pattern is calculated from a pre-estimated crystal structure model. By fitting all calculated values and actual measured values, parameters (lattice constant, atom coordinate, population, etc.) relevant to the crystal structure can be precisely analyzed. Thus, characteristics of the crystal structure(s) of phase(s) contained in the sample can be examined. Examples of the characteristics of the crystal structure that can be determined include symmetry of the crystal structure, that is, the space group to which the crystal structure belongs, and bond angle distortion ($\sigma^2$/deg$^2$).

As an analysis program, RIETAN-FP is used, for example. The analysis method using RIETAN-FP is explained in detail in, for example, Chapter 9 "Let's use RIETAN-FP" in the non-patent literature "Funmatsu X-sen Kaiseki no Jissai" (Reality of Powder X-ray Analysis) written by Izumi Nakai and Fujio Izumi, edited by X-ray Analysis Investigation Conversazione, which belongs to the Japan Society for Analytical Chemistry, and published by Asakura Shoten. RIETAN-FP is a program for Rietveld refinement, which had been distributed for free on the developer's website (which was closed as of January 2023) on the Internet. At least in March 2023, the program had been available on the following web archive:

http://web.archive.org/web/20220209014122fw_/http://fujioiz umi.verse.j p/download/download.html

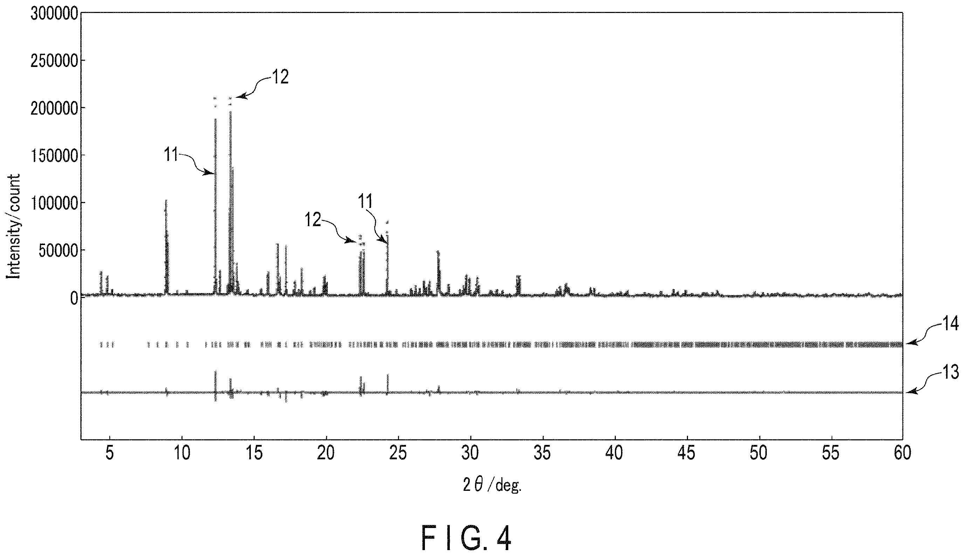

FIG. 4 shows a result of Rietveld refinement using an exemplary synchrotron radiation X-ray diffraction pattern. The example shown in FIG. 4 is a result of the refinement using the space group C2/m assuming a $TiNb_2O_7$-type crystal structure. FIG. 4 shows an example in which good fitting was obtained, as indicated by the positions of the calculated peaks 11 (solid line) and the observed peaks 12 (plot) of the space group C2/m corresponding to the acceptable Bragg reflection 14, together with the peak intensity differences 13 between the calculated peaks 11 and the observed peaks 12 being small. For a $Nb_{10}T_{12}O_{29}$-type crystal structure, the refinement is performed using the space group A2/m, for example.

When the synchrotron radiation X-ray diffraction measurement is performed on an active material contained in an electrode, for example, the sample is prepared as follows.

First, in order to ascertain the crystal structure of the active material, the active material is put in a state in which lithium ions are completely extracted therefrom. For example, when the active material is used in the negative electrode, the battery is put into a completely-discharged state. For example, the discharged state of the battery can be achieved by repeating several times a discharging of the battery in a 25°C environment at 0.1 C current until a rated end voltage is reached or until the battery voltage becomes 1.0 V, so as to make the current value during discharge be 1/100 or lower than the rated capacity. There is a case where lithium ions remain even in the discharged state.

Next, the battery is disassembled in a glove box filled with argon, and the electrode is taken out and washed with an appropriate solvent. For example, ethyl methyl carbonate may be used as an appropriate solvent. If the washing of the electrode is insufficient, an impurity phase such as lithium carbonate and lithium fluoride may be mixed in due to the influence of the lithium ions remaining in the electrode. In such a case, it is preferable to use an airtight container with which measurement can be performed in an inert gas atmosphere. The washed electrode is cut into a strip shape having a short-side width approximately equal to the diameter of the capillary used for synchrotron radiation X-ray diffraction, so as to obtain the measurement sample. The sample is directly inserted into the capillary to perform the measurement.

At this time, a metal foil as current collector, an electro-conductive agent, and binder are measured in advance, so as to ascertain peaks derived therefrom. It is a matter of course that this operation can be omitted if such peaks can be ascertained in advance. When the peak of the current collector and the peak of the active material overlap with each other, it is desirable to perform the measurement after dislodging the active material-containing layer off the current collector. This is in order to separate the overlapping peaks when quantitatively measuring the peak intensity. Although the active material-containing layer may be physically dislodged, the layer can be easily removed by applying ultrasonic waves in a solvent. When ultrasonic treatment is performed to remove the active material-containing layer from the current collector, an electrode mixture powder (including the active material, electro-conductive agent, and binder) can be collected by evaporating off the solvent. The synchrotron radiation X-ray diffraction measurement of the active material can be performed by loading the collected electrode mixture powder into the capillary and measuring. The electrode mixture powder collected by the ultrasonic treatment can also be subjected to various analyses other than the synchrotron radiation X-ray diffraction measurement.

<Examination of Crystallite Diameter>

For determining the crystallite diameter (crystallite size), measurement can be performed using Cu-K$\alpha$ rays with a powder X-ray diffractometer used in a standard laboratory.

First, the target sample is ground until an average particle size reaches about 5 $\mu$m. The average particle size can be obtained by laser diffraction. The ground sample is filled in a holder part having a depth of 0.2 mm, formed on a glass sample plate. At this time, care should be taken to fill the holder part sufficiently with the sample. Precaution should be taken to avoid cracks and voids due to insufficient filling of the sample. Then, another glass plate is used to smoothen the surface of the sample by sufficiently pressing with the glass plate. Hereupon, precaution should be taken to avoid too much or too little a filling amount, so as to prevent any rises and depressions relative to the basic plane of the glass holder. Next, the glass plate filled with the sample is set in a powder X ray diffractometer, and an X-ray diffraction (XRD) pattern is obtained using Cu-K$\alpha$ rays.

When taking an active material included in an electrode to be a sample, for example, the electrode mixture powder collected by performing the abovementioned disassembly of the battery up to the ultrasonic wave treatment can be used. Alternatively, the disassembly of the battery up to the washing of the electrode may be performed, and the washed electrode can be cut have the same area as that of a holder of the powder X ray diffractometer, and used as a measurement sample. The sample is directly attached onto the glass holder to perform the measurement.

As an apparatus for powder X ray diffraction measurement, SmartLab manufactured by Rigaku is used, for example. Measurement is performed under the following conditions:

X ray source: Cu target
Output: 45 kV, 200 mA
seller slit: 5 degrees in both incident light and received light
step width ($2\theta$): 0.02 deg
scan rate: 20 deg/min
semiconductor detector: D/teX Ultra 250
measurement range: $5° \leq 2\theta \leq 90°$
sample plate holder: flat glass sample plate holder (0.5 mm thick).

When another apparatus is used, measurement using a standard Si powder for powder X-ray diffraction is performed, conditions with which measurement results of peak intensities, half-value widths, and diffraction angles that are equivalent to those obtained by the above apparatus are sought out, and the sample is measure at those conditions.

Conditions of the XRD measurement is set, such that an XRD pattern applicable to Rietveld analysis is obtained. In order to collect data for Rietveld analysis, specifically, the measurement time and/or X ray intensity is appropriately adjusted in such a manner that the step width is made 1/3 to 1/5 of the minimum half width of the diffraction peaks, and the intensity at the peak position of strongest reflected intensity is 5,000 cps or more.

A diffraction peak having the highest diffraction intensity in the obtained X-ray spectrum is selected. For example, for the $Nb_2TiO_7$ phase, a (110) plane is measured. The crystallite size can be calculated from the obtained half-value width of the peak. Herein, the crystallite size is calculated from the Scherrer equation shown by the following equations 1 and 2.

$$\text{Crystallite Size (nm)} \quad = \quad K\lambda/\beta\cos\theta \qquad (1)$$
$$\beta \quad = \quad (\beta_e{}^2 - \beta_o{}^2)^{1/2} \quad (2)$$

Here, K the Scherrer constant is 0.9, $\lambda$ the X-ray wavelength is 0.15406 nm, $\theta$ is the Bragg angle, $\beta$ is the integrated width of the diffraction peak, $\beta_e$: half-value width of the diffraction peak, and $\beta_o$: correction value (0.07°) of the half-value width.

<Measurement of Composition of Niobium-Titanium Oxide Phase>

The composition of the niobium-titanium oxide phase in the active material can be analyzed using Inductively Coupled Plasma (ICP) emission spectrometry, for example.

In order to measure the composition in an active material assembled into a battery according to ICP emission spectrometry, the following procedure is specifically performed.

First, according to the previously described procedure, an electrode including the active material is taken out from the secondary battery, and washed. The washed electrode is put in a suitable solvent, and irradiated with an ultrasonic wave. For example, an electrode is put into ethyl methyl carbonate in a glass beaker, and the glass beaker is vibrated in an ultrasonic washing machine, and thereby the active material-containing layer can be separated from the current collector.

Next, the separated active material-containing layer is dried under reduced pressure. The obtained active material-containing layer is ground in a mortar or the like to provide a powder including the target active material, electro-conductive agent, binder, and the like. By dissolving the powder in an acid, a liquid sample including the active material can be prepared. Here, hydrochloric acid, nitric acid, sulfuric acid, hydrogen fluoride, and the like may be used as the acid. By subjecting the liquid sample to ICP emission spectrometric analysis, the components in the active material, for example, composition of the niobium titanium-containing oxide phase can be found.

<Average Particle Size Measurement>

The electrode mixture powder described in the above section of the synchrotron radiation X-ray diffraction measurement is fired to burn away the electro-conductive agent and the binder. The remaining active material particles are dispersed in an N-methyl-2-pyrrolidone (NMP) solvent and subjected to an ultrasonic treatment to resolve secondary particles and other aggregates, so as to obtain a dispersion solution of active material primary particles as a sample for particle size distribution measurement. A particle size distribution measurement of the constituent particles of the dispersion solution is performed using a laser diffraction distribution measurement apparatus. For example, Microtrac MT3100II manufactured by Microtrac BEL Corp. can be used as the measurement apparatus.

The ultrasonic treatment for obtaining the above dispersion solution is performed by a sample supply system supplementing the laser diffraction distribution measurement apparatus. The ultrasonic treatment is performed, for example, at an output of 40 W for 300 seconds. The particle size $D_{50}$, at which the volume cumulative frequency from the small particle size side in the particle distribution chart obtained by the above laser diffraction distribution method, is taken as the average primary particle size.

According to the first approach, an active material is provided. The active material includes a niobium-titanium oxide phase of monoclinic structure, and includes per unit lattice, at least one $(Nb, Ti)O_6$ octahedron site composed only with vertex-sharing, where a bond angle distortion in the octahedron site is 0.8 $\sigma^2/deg^2$ or less. The crystallite diameter of the niobium-titanium oxide phase is 85 nm to 130 nm. The active material can realize a secondary battery exhibiting excellent charge-discharge efficiency and cycle life performance.

(Second Approach)

According to the second approach, an electrode is provided.

The electrode according to the second approach includes the active material according to the first approach. This electrode may be a battery electrode including the active material according to the first approach as a battery active material. The electrode as the battery electrode may be, for example, a negative electrode including the active material according to the first approach as a negative electrode active material.

The electrode may include a current collector and an active material-containing layer. The active material-containing layer may be formed on both of obverse and reverse surfaces or one surface of the current collector. The active material-containing layer may contain the active material, and optionally an electro-conductive agent and a binder.

The active material-containing layer may contain the active material according to the first approach alone, or may contain two or more species of the active materials according to the first approach. Furthermore, the active material-containing layer may contain a mixture obtained by mixing one specie or two or more species of the active materials according to the first approach with one species or two or more species of other active materials.

For example, in a case where the active material according to the first approach is included as the negative electrode active material, examples of such other active materials include lithium titanate having a ramsdellite structure (e.g., $Li_{2+y}Ti_3O_7$, $0 \le y \le 3$), lithium titanate having a spinel structure (e.g., $Li_{4+x}Ti_5O_{12}$, $0 \le x \le 3$), titanium dioxide ($TiO_z$), anatase titanium dioxide, rutile titanium dioxide, niobium pentoxide ($Nb_2O_5$), hollandite titanium composite oxide, orthorhombic titanium-containing composite oxides, and monoclinic niobium titanium oxides that do not include $(Nb, Ti)O_6$ octahedral sites composed only with vertex-sharing.

Examples of the orthorhombic titanium-containing composite oxide include a compound represented by $Li_{2+a}M^I_{2-b}Ti_{6-c}M^{II}_dO_{14+\sigma}$. Here, $M^I$ is at least one selected from the group consisting of Sr, Ba, Ca, Mg, Na, Cs, Rb and K. $M^{II}$ is at least one selected from the group consisting of Zr, Sn, V, Nb, Ta, Mo, W, Y, Fe, Co, Cr, Mn, Ni and Al. The respective subscripts in the composition formula are specified as follows: $0 \le a \le 6$, $0 \le b < 2$, $0 \le c < 6$, $0 \le d < 6$, and $-0.5 \le \sigma \le 0.5$. Specific examples of the orthorhombic titanium-containing composite oxide include $Li_{2+a}Na_2Ti_6O_{14}$ ($0 \le a \le 6$).

An example of a monoclinic niobium-titanium oxide that does not include a $NbO_6$ octahedron site or a $TiO_6$ octahedron site composed only with vertex-sharing is a compound represented by $Li_xNb_{14}TiO_{37}$, where $0 \le x \le 29$. Another example is a compound represented by $Li_xNb_{24}TiO_{64}$, where $0 \le x \le 49$. In a crystal structure of these compounds, sharing other than vertex-sharing, such as edge-sharing, is formed in all of the octahedron sites.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, graphite, carbon nanotubes, and carbon nanofibers. One of these may be used as the electro-conductive agent, or alternatively, two or more may be used in combination as the electro-conductive agent. Alternatively, instead of using an electro-conductive agent, a carbon coating or an electro-conductive inorganic material coating may be applied to the surface of the active material particle.

The binder is added to fill gaps among the dispersed active material and also to bind the active material with the current collector. Examples of the binder include polytetrafluoroethylene (PTFE), polyvinylidene fluoride (PVdF), fluorine rubber, styrene-butadiene rubber, polyacrylate compounds, imide compounds, carboxymethyl cellulose (CMC), and salts of CMC. One of these may be used as the binder, or alternatively, two or more may be used in combination as the binder.

The blending proportions of active material, electro-conductive agent and binder in the active material-containing layer may be appropriately changed according to the use of the electrode. For example, in the case of using the electrode as a negative electrode of a secondary battery, the active material (negative electrode active material), electro-conductive agent and binder are preferably blended in proportions of 68% by mass to 96% by mass, 2% by mass to 30% by mass, and 2% by mass to 30% by mass, respectively. When the amount of electro-conductive agent is 2% by mass or more, the current collection performance of the active material-containing layer can be improved. When the amount of binder is 2% by mass or more, binding between the active material-containing layer and current collector is sufficient, whereby excellent cycling performances can be expected. On the other hand, an amount of each of the electro-conductive agent and binder is preferably 30% by mass or less, in view of increasing the capacity.

There may be used for the current collector, a material which is electrochemically stable at the potential (vs. Li/Li$^+$) at which lithium (Li) is inserted into and extracted from the active material. For example in the case where the active material is used as a negative electrode active material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 um to 20 um. The current collector having such a thickness can maintain balance between the strength and weight reduction of the electrode.

The current collector may include a portion where the negative electrode active material-containing layer is not formed on a surface thereof. This portion may serve as a negative electrode current collecting tab.

The electrode may be fabricated by the following method, for example. First, active material, electro-conductive agent, and binder are suspended in a solvent to prepare a slurry. The slurry is applied onto one surface or both of obverse and reverse surfaces of a current collector. Next, the applied slurry is dried so as to obtain a stack of active material-containing layer and current collector. Then, the stack is subjected to pressing. The electrode can be fabricated in this manner.

Alternatively, the electrode may also be fabricated by the following method. First, active material, electro-conductive agent, and binder are mixed to obtain a mixture. Next, the mixture is formed into pellets. Then the electrode can be obtained by arranging the pellets onto the current collector.

The electrode according to the second approach includes the active material according to the first approach. Thus, the electrode can realize a secondary battery that exhibits excellent charge-discharge efficiency and cycle life performance.

(Third Approach)

According to a third approach, there is provided a secondary battery including a negative electrode, a positive electrode, and an electrolyte. As the negative electrode, the secondary battery includes the electrode according to the second approach. That is, the secondary battery according to the third approach includes as the negative electrode, an electrode that includes the active material according to the first approach as a battery active material.

The secondary battery may further include a separator provided between the positive electrode and the negative electrode. The negative electrode, the positive electrode, and the separator may configure an electrode group. The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

The secondary battery may be, for example, a lithium secondary battery. The secondary battery also includes nonaqueous electrolyte secondary batteries including nonaqueous electrolyte(s).

Hereinafter, the negative electrode, positive electrode, electrolyte, separator, container member, negative electrode terminal, and positive electrode terminal will be described in detail.

1) Negative Electrode

The negative electrode may include a negative electrode current collector and a negative electrode active material-containing layer. The negative electrode current collector and the negative electrode active material-containing layer may respectively be the current collector and active material-containing layer that may be included in the electrode according to the second approach. The negative electrode active material-containing layer contains the active material according to the first approach as negative electrode active material.

Of the details of the negative electrode, portions that overlap with the details described in the second approach are omitted.

The density of the negative electrode active material-containing layer (excluding the current collector) is preferably from 1.8 g/cm$^3$ to 3.5 g/cm$^3$. The negative electrode having the density of the negative electrode active material-containing layer within this range is excellent in energy density and ability of holding the electrolyte. The density of the negative electrode active material-containing layer is more preferably from 2.5 g/cm$^3$ to 2.9 g/cm$^3$.

The negative electrode may, for example, be fabricated by the same method as that for the electrode according to the second approach.

2) Positive Electrode

The positive electrode may include a positive electrode current collector and a positive electrode active material-containing layer. The positive electrode active material-containing layer may be formed on one surface or both of obverse and reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide ($MnO_2$), iron oxides, copper oxides, nickel oxides, lithium manganese composite oxides (e.g., $Li_xMn_2O_4$ or $Li_xMnO_2$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese cobalt composite oxides (e.g., $Li_xMn_yCo_{1-y}O_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium phosphates having an olivine structure (e.g., $Li_xFePO_4$; $0 < x \leq 1$, $Li_xFe_{1-y}Mn_yPO_4$; $0 < x \leq 1$, $0 < y \leq 1$, and $Li_xCoPO_4$; $0 < x \leq 1$), iron sulfate ($Fe_2(SO_4)_3$), vanadium oxides (e.g., $V_2O_5$), and lithium nickel cobalt manganese composite oxide ($Li_xNi_{1-y-z}Co_yMn_zO_2$; $0 < x \leq 1$, $0 < y < 1$, $0 < z < 1$, $y + z < 1$).

Among the above, examples of compounds more preferable as the positive electrode active material include lithium manganese composite oxides having a spinel structure (e.g., $Li_xMn_2O_4$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium manganese cobalt composite oxide (e.g., $Li_xMn_yCo_{1-y}O_2$; $0 < x \leq 1$, $0 < y < 1$), lithium iron phosphates (e.g., $Li_xFePO_4$; $0 < x \leq 1$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$). The positive electrode potential can be made high by using these positive electrode active materials.

When an ambient temperature molten salt is used as the electrolyte of the battery, it is preferable to use a positive electrode active material including lithium iron phosphate, $Li_xVPO_4F$ ($0 \leq x \leq 1$), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle diameter of the positive electrode active material is preferably from 100 nm to 1 um. The positive electrode active material having a primary particle size of 100 nm or more is easy to handle during industrial production. In the positive electrode active material having a primary particle size of 1 um or less, in-solid diffusion of lithium ions can proceed smoothly.

The specific surface area of the positive electrode active material is preferably from 0.1 $m^2$/g to 10 $m^2$/g. With the positive electrode active material having a specific surface area of 0.1 $m^2$/g or more, sufficient sites for inserting and extracting Li ions can be secured. The positive electrode active material having a specific surface area of 10 $m^2$/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 $\mu$m to 20 um, and more preferably 15 $\mu$m or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface thereof. This portion may serve as a positive electrode current collecting tab.

The positive electrode may be fabricated by a method similar to that for the electrode according to the second approach, for example, using a positive electrode active material.

3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0 . 5 mol/L to 2.5 mol/L.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), and lithium bistrifluoromethylsulfonylimide ($LiN(CF_3SO_2)_2$) , and mixtures thereof. The electrolyte salt is preferably resistant to oxidation even at a high potential, and most preferably $LiPF_6$.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF) , and dioxolane (DOX) ; linear ethers such as dimethoxy ethane (DME) and diethoxy ethane (DEE) ; $\gamma$-butyrolactone (GBL) , acetonitrile (AN) , and sulfolane (SL) . These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C). The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of $1 \times 10^{-6}$ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula $Li_{1+x}M\alpha_2(PO_4)_3$. $M\alpha$ in the above general formula is, for example, one or more selected from the group consisting of titanium (Ti) , germanium (Ge), strontium (Sr) , zirconium (Zr) , tin (Sn) , aluminum (Al), and calcium (Ca) . The subscript x is within the range of $0 \leq x \leq 2$.

Specific examples of the lithium phosphate solid electrolyte having the NASICON structure include a LATP compound represented by $Li_{1+x}Al_xTi_{2-x}(PO_4)_3$ where $0.1 \leq x \leq 0.5$; a compound represented by $Li_{1+x}Al_yM\beta_{2-y}(PO_4)_3$ where $M\beta$ is one or more selected from the group consisting of Ti, Ge, Sr, Zr, Sn, and Ca, $0 \leq x \leq 1$, and $0 \leq y \leq 1$; a compound represented by $Li_{1+x}Al_xGe_{2-x}(PO_4)_3$ where $0 \leq x \leq 2$; a compound represented by $Li_{1+x}Al_xZr_{2-x}(PO_4)_3$ where $0 \leq x \leq 2$; a compound represented by $Li_{1+x+y}Al_xM\gamma_{2-x}Si_yP_{3-y}O_{12}$ where $M\gamma$ is one or more selected from the group consisting of Ti and Ge, $0 < x \leq 2$, and $0 \leq y < 3$; and a compound represented by $Li_{1+2x}Zr_{1-x}Ca_x(PO_4)_3$ where $0 \leq x < 1$.

In addition to the above lithium phosphate solid electrolyte, examples of the oxide solid electrolyte include amorphous LIPON compounds represented by $Li_xPO_yN_z$ where $2.6 \leq x \leq 3.5$, $1.9 \leq y \leq 3.8$, and $0.1 \leq z \leq 1.3$ (e.g., $Li_{2.9}PO_{3.3}N_{0.46}$) ; a compound having a garnet structure represented by $La_{5+x}A_xLa_{3-x}M\delta_2O_{12}$ where A is one or more selected from the group consisting of Ca, Sr, and Ba, $M\delta$ is one or more selected from the group consisting of Nb and Ta, and $0 \leq x \leq 0.5$; a compound represented by $Li_3M\delta_{2-x}L_2O_{12}$ where $M\delta$ is one or more selected from the group consisting of Nb and Ta, L may include Zr, and $0 \leq x \leq 0.5$; a compound represented by $Li_{7-3x}Al_xLa_3Zr_3O_{12}$ where $0 \leq x \leq 0.5$; a LLZ compound represented by $Li_{5+x}La_3M\delta_{2-x}Zr_xO_{12}$ where $M\delta$ is one or more selected from the group consisting of Nb and Ta, and $0 \leq x \leq 2$ (e.g., $Li_7La_3Zr_2O_{12}$) ; and a compound having a perovskite structure and represented by $La_{2/3-x}Li_xTiO_3$ where $0 . 3 \leq x \leq 0.7$.

One or more among the above compounds may be used as the solid electrolyte. Two or more of the above solid electrolytes may be used, as well.

The electrolyte may be an aqueous electrolyte that includes water.

The aqueous electrolyte includes an aqueous solvent and an electrolyte salt. The aqueous electrolyte may be, for example, liquid. The liquid aqueous electrolyte is an aqueous solution prepared by dissolving an electrolyte salt as solute in an aqueous solvent. The aqueous solvent is, for example, a solvent including 50% by volume or more of water. The solution including water may be pure water.

The aqueous electrolyte may be a gel aqueous electrolyte, which is a composite between the liquid aqueous electrolyte and a polymeric compound. As the polymeric compound, for example, polyvinylidene fluoride (PVdF), polyacrylonitrile (PAN), polyethylene oxide (PEO), and the like may be used.

4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because at a certain temperature, such a porous film melts and can thereby shut off current.

5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

6) Negative Electrode Terminal

The negative electrode terminal may be made of a material that is electrochemically stable at the Li insertion-extraction potential of the negative electrode active materials mentioned above, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

7) Positive Electrode Terminal

The positive electrode terminal may be made of, for example, a material that is electrically stable in the potential range of 3 V to 4.5 V (vs. Li/Li$^+$) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

Next, the secondary battery according to the approach will be more concretely described with reference to the drawings.

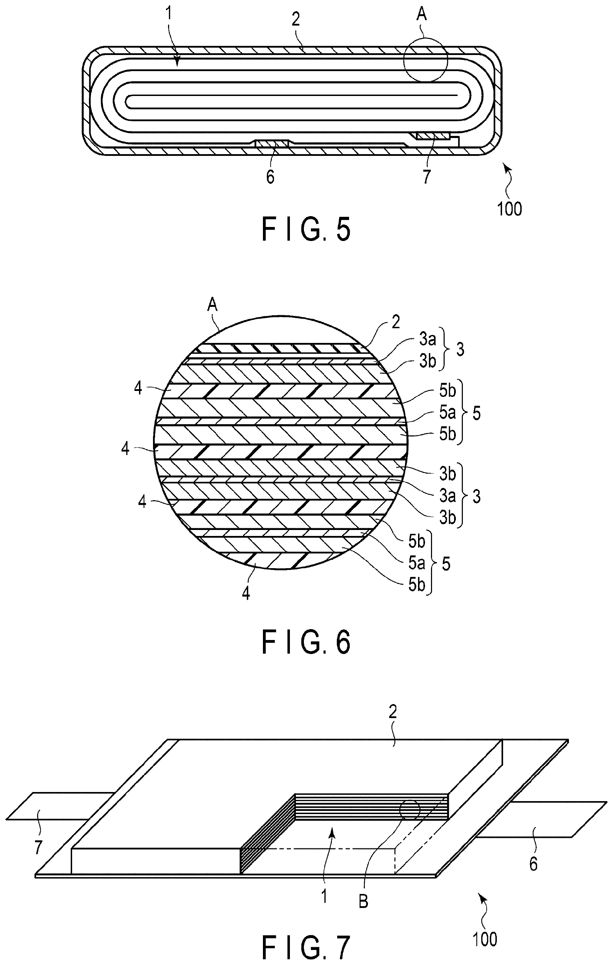

FIG. 5 is a cross-sectional view schematically showing an example of the secondary battery. FIG. 6 is an enlarged cross-sectional view of section A of the secondary battery shown in FIG. 5.

The secondary battery 100 shown in FIGS. 5 and 6 includes a bag-shaped container member 2 shown in FIG. 5, an electrode group 1 shown in FIGS. 5 and 6, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 5, the electrode group 1 is a wound electrode group in a flat form. The wound electrode group 1 in a flat form includes a negative electrode 3, a separator 4, and a positive electrode 5, as shown in FIG. 6. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 6. For the other portions of the negative electrode 3, negative electrode active material-containing layers 3b are formed on both of obverse and reverse surfaces of the negative electrode current collector 3a.

The positive electrode 5 includes a positive electrode current collector 5a and positive electrode active material-containing layers 5b formed on both of obverse and reverse surfaces of the positive electrode current collector 5a.

As shown in FIG. 5, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

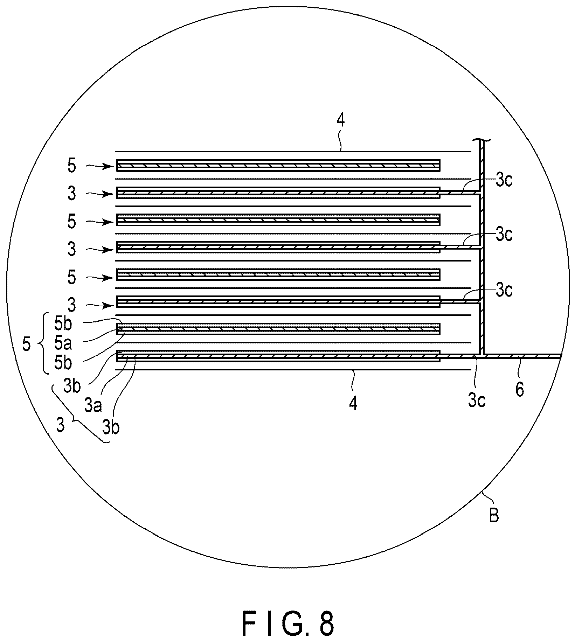

The secondary battery according to the approach is not limited to the secondary battery of the structure shown in FIGS. 5 and 6, and may be, for example, a battery of a structure as shown in FIGS. 7 and 8.

FIG. 7 is a partially cut-out perspective view schematically showing another example of the secondary battery. FIG. 8 is an enlarged cross-sectional view of section B of the secondary battery shown in FIG. 7.

The secondary battery 100 shown in FIGS. 7 and 8 includes an electrode group 1 shown in FIGS. 7 and 8, a container member 2 shown in FIG. 7, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 8, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces thereof.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 8, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the third approach includes the active material according to the first approach as a negative electrode active material. Thus, the secondary battery can exhibit excellent charge-discharge efficiency and cycle life performance.

(Fourth Approach)

According to a fourth approach, a battery module is provided. The battery module includes plural of secondary batteries according to the third approach.

In the battery module, each of the single-batteries may be arranged to be electrically connected in series or in parallel, or may be arranged in combination of in-series connection and in-parallel connection.

An example of the battery module according to the approach will be described next, with reference to the drawings.

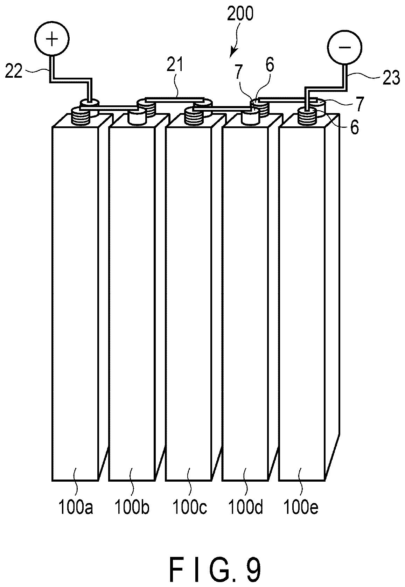

FIG. 9 is a perspective view schematically showing an example of the battery module. The battery module 200 shown in FIG. 9 includes five single-batteries 100a to 100e, four bus bars 21, a positive electrode-side lead 22, and a negative electrode-side lead 23 . Each of the five single-batteries 100a to 100e is the secondary battery according to the third approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 9 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the fourth approach includes the secondary battery according to the third approach. Therefore, the battery module can exhibit excellent charge-discharge efficiency and cycle life performance.

(Fifth Approach)

According to a fifth approach, a battery pack is provided. The battery pack includes a battery module according to the fourth approach. The battery pack may include a single secondary battery according to the third approach, in place of the battery module according to the fourth approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

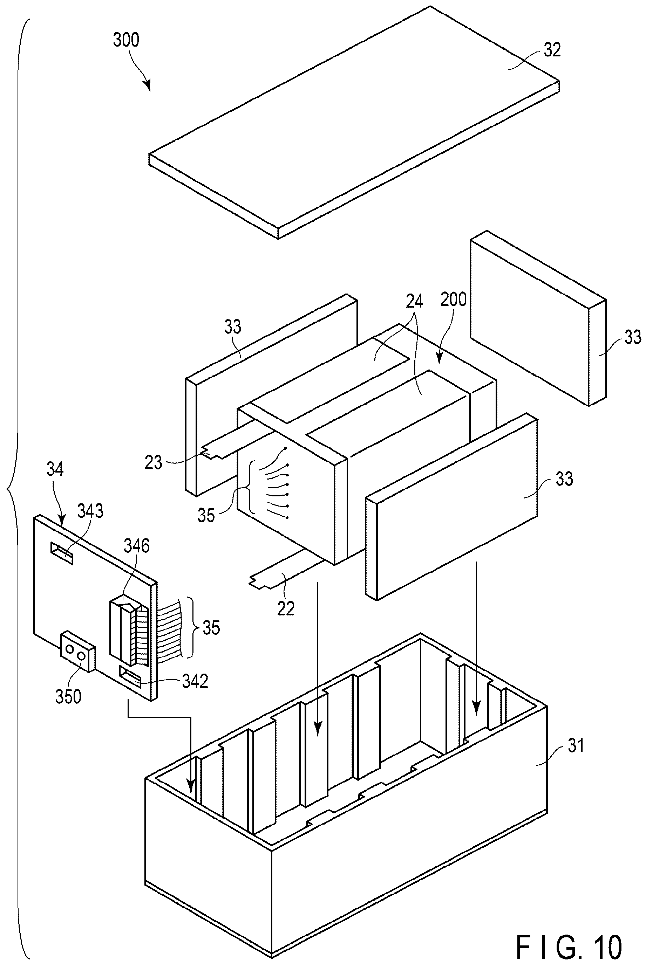

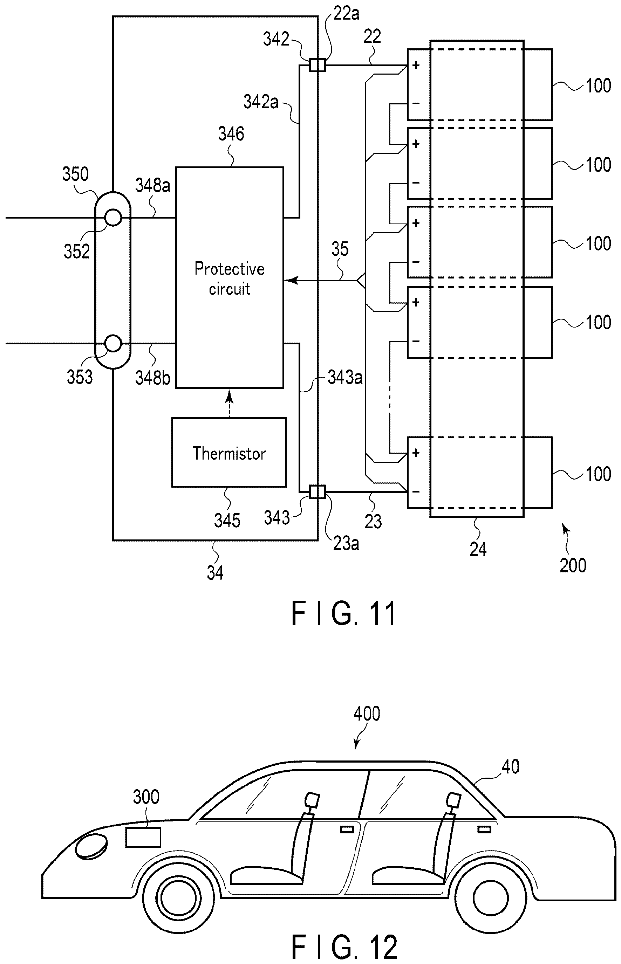

FIG. 10 is an exploded perspective view schematically showing an example of the battery pack. FIG. 11 is a block diagram showing an example of an electric circuit of the battery pack shown in FIG. 10.

A battery pack 300 shown in FIGS. 10 and 11 includes a housing container 31, a lid 32, protective sheets 33, a battery module 200, a printed wiring board 34, wires 35, and an insulating plate (not shown).

The housing container 31 shown in FIG. 10 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the third approach. The plural single-batteries 100 are electrically connected in series, as shown in FIG. 11. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode(s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fifth approach is provided with the secondary battery according to the third approach or the battery module according to the fourth approach. Accordingly, the battery pack can exhibit excellent charge-discharge efficiency and cycle life performance.

(Sixth Approach)

According to a sixth approach, a vehicle is provided. The battery pack according to the fifth approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 12 is a partially see-through diagram schematically showing an example of the vehicle.

A vehicle 400, shown in FIG. 12 includes a vehicle body 40 and a battery pack 300 according to the fifth approach. In the example shown in FIG. 12, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 12, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

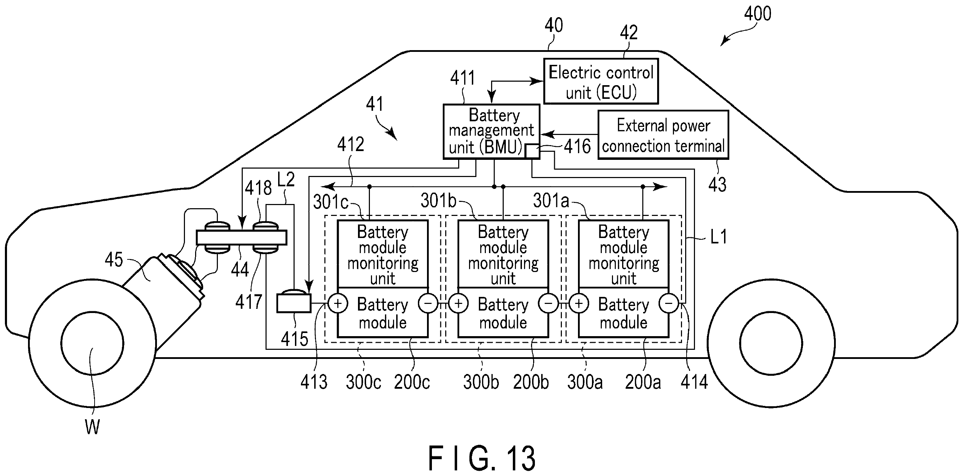

Next, with reference to FIG. 13, an aspect of operation of the vehicle according to the approach is explained.

FIG. 13 is a diagram schematically showing an example of a control system related to an electric system in the vehicle. A vehicle 400, shown in FIG. 13, is an electric automobile.

The vehicle 400, shown in FIG. 13, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 13, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the third approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c). The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 13) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the sixth approach is installed with the battery pack according to the fifth approach. Thus, by having the battery pack installed thereon, the vehicle that can exhibit high performance and having high reliability can be provided.

Examples

Hereinafter, the above-described approaches will be described in more detail based on examples.

<Synthesis Method>

(Example 1)

A niobium-titanium oxide was synthesized by a solid phase synthesis method, described below.

First, to obtain a $Nb_2TiO_7$ phase, $Nb_2O_5$ particles and $TiO_2$ particles were mixed at a molar ratio of 1:1 by wet bead milling for two hours. The obtained mixed slurry was subjected to granulation drying using a spray dryer apparatus. The obtained granulated particles were subjected to pre-firing (first firing) at a temperature of 800°C for 12 hours. After pre-firing, the obtained powder was placed in a platinum crucible and subjected to main firing (second firing) at 1050°C for three hours. The obtained fired granulated matter was subjected to grinding using a thin film spin system high-speed mixer manufactured by PRIMIX Corporation, called "FILMIX Model 80", so that the average particle size $D_{50}$ fell within the range of 1.0 μm to 3.5 um, and the active material of Example 1 was thereby obtained.

(Example 2)

A niobium titanium oxide was synthesized by a solid phase synthesis method, described below.

First, to obtain a $Nb_2TiO_7$ phase, $Nb_2O_5$ particles and $TiO_2$ particles were mixed at a molar ratio of 1:1 with dry ball milling. The obtained mixed powder was placed in an alumina crucible and subjected to pre-firing (first firing) at a temperature of 800°C for 12 hours. After pre-firing, the obtained powder was placed in a platinum crucible and subjected to main firing (second firing) at 1200 °C for 5 hours. After main firing, the powder was lightly ground in an agate mortar, and coarse particles were removed using a sieve having a mesh size of 25 um, whereby the active material of Example 2 was obtained.

(Example 3)

The active material of Example 3 was obtained in the same manner as the method described in Example 2, except that the particles subjected to main firing in Example 2 were ground at the same strength as Example 1 using the thin-film spin system high-speed mixer.

(Example 4)

To obtain a niobium-titanium oxide, synthesis was performed using the sol-gel method described in the non-patent document Chem. Mater. 2011, 23, 8, 2027-2029. Specifically, the synthesis was performed in the following manner. Grinding was kept to a light degree to be just enough for resolving agglomeration of the fired powder.

$Nb_2O_5$, hydrofluoric acid solution (HF:$H_2O$ = 40:70), $Ti(OC_3H_7)_4$, ammonia, and citric acid monohydrate were used as starting materials. First, a transparent solution was obtained by dissolving $Nb_2O_5$ in the hydrofluoric acid solution. To remove F ions from the solution, ammonia was added and a white $Nb(OH)_5$ precipitate was obtained. After washing and drying the precipitate, $Nb(OH)_5$ was dissolved in citric acid, and a Nb(V) citric solution was obtained. A water-ethanol solution containing $Ti(OC_3H_7)_4$ was added to this obtained solution, while the pH of the solution was adjusted by adding ammonia. This final mixture containing Nb(V) and Ti(IV) ions was stirred at 90°C to form a citric gel, and the gel was heated to 140°C to obtain a precursor. The precursor was subjected to main firing at 1500°C, and a powder of a niobium-titanium oxide having a large crystallite size exceeding 85 nm was obtained. After firing, the powder was lightly ground in an agate mortar, and coarse particles were removed using a sieve having a mesh size of 25 um, whereby the active material of Example 4 was obtained.

(Example 5)

The active material of Example 5 was obtained in a manner similar to the method described in Example 4, except that the particles were ground using the thin-film spin system high-speed mixer after being subjected to main firing.

(Examples 6 to 11)

The active material of each of Examples 6 to 11 was obtained in a manner similar to the method described in Example 1, except that the additive elements, namely the materials other than $Nb_2O_5$ particles and $TiO_2$ particles, were mixed at a predetermined ratio so as to achieve the compositions given below in Table 1.

(Example 12)

The active material of Example 12 was obtained in a manner similar to the method described in Example 1, except that the molar ratio of $Nb_2O_5$ particles to $TiO_2$ particles was made to be 2.5:1 to obtain a $Nb_{10}Ti_2O_{29}$ phase.

(Comparative Example 1)

A niobium-titanium oxide was synthesized by a solid phase synthesis method, which is described below. First, to obtain $Nb_2TiO_7$, the $Nb_2O_5$ particles and the $TiO_2$ particles were mixed by dry ball milling at a molar ratio of 1:1. The obtained powder was placed in an alumina crucible and subjected to pre-firing (first firing) at 800°C for 12 hours. After pre-firing, the obtained powder was placed in a platinum crucible and subjected to pre-firing (second firing) at 1200°C for 5 hours. After main firing, the fired powder was ground and mixed using a dry bead mill until the average particle size $D_{50}$ fell within the range from 1.0 um to 3.5 $\mu$m, and the active material of Comparative Example 1 was thereby obtained.

(Comparative Example 2)

The active material of Comparative Example 2 was obtained by the same method as in Example 1, except that the fired granulated matter obtained in Example 1 was ground using dry ball milling until the average particle size $D_{50}$ fell under the range from 1.0 $\mu$m to 3.5 um.

(Comparative Example 3)

The active material of Comparative Example 3 was obtained by performing the synthesis using the sol-gel method described in the non-Patent document Chem. Mater. 2011, 23, 8, 2027-2029. Specifically, the synthesis was performed in the following manner. Grinding was kept to a light degree to be just enough for resolving agglomeration of the fired powder.

$Nb_2O_5$, a hydrofluoric acid solution (HF:$H_2O$ = 40:70), $Ti(OC_3H_7)_4$, ammonia, and citric acid monohydrate were used as starting materials. First, a transparent solution was obtained by dissolving $Nb_2O_5$ in the hydrofluoric acid solution. To remove F ions from the solution, ammonia was added and a white $Nb(OH)_5$ precipitate was obtained. After washing and drying the precipitate, $Nb(OH)_5$ was dissolved in citric acid, and a Nb(V) citric solution was obtained. A water-ethanol solution containing $Ti(OC_3H_7)_4$ was added to this obtained solution while the pH of the solution was adjusted by adding ammonia. This final mixture containing Nb(V) and Ti (IV) ions was stirred at 90°C to form a citric gel, and the gel was heated to 140°C to obtain a precursor. The precursor was subjected to main firing at 900°C, and a powder of niobium-titanium oxide was obtained. After firing, the powder was lightly ground in an agate mortar, and coarse particles were removed using a sieve having a mesh size of 25 um, whereby the active material of Comparative Example 3 was obtained.

(Comparative Example 4)

The active material of Comparative Example 4 was obtained by the same method as Comparative Example 3, except that the fired powder obtained in Comparative Example 3 was ground at a strength similar to that in Comparative Example 2, using dry bead milling.

<Physical Properties Evaluation>

For the active material obtained in each example, the crystal structure, the crystallite diameter, and an average particle size ($D_{50}$) were evaluated. With regard to the crystal structure, the above-described synchrotron radiation X-ray diffraction measurement was performed, and the space group to which the niobium-titanium oxide phase group belongs was examined, an octahedron site having vertex-sharing only was examined, and a valence angle distortion ($\sigma^2/deg^2$) regarding the octahedron site was extracted from the Rietveld refinement result. Furthermore, a normal (laboratory-level) powder X-ray diffraction measurement was performed, and a crystallite diameter was calculated by the above-described method using a Rietveld refinement result of the obtained X-ray spectrum. The average particle size was measured based on a laser diffraction scattering method, as described above. The foregoing results are summarized below in Table 2.

<Electrochemical Measurement>

Using the active materials obtained in each of the examples, electrochemical measurement cells were produced by the procedure described below.

100% by mass of the active material powder obtained in each example, 10% by mass of acetylene black as an electro-conductive agent, 5% by mass of carbon nanofiber, 10% by mass of polyvinylidene fluoride (PVdF) as a binder were added to N-methylpyrrolidone (NMP) and mixed to obtain a slurry. This slurry was applied onto one face of a current collector made of an aluminum foil having a thickness of 12 um, and then, was subjected to drying and pressing, thereby producing an electrode having an electrode density of 2.4 g/cm$^3$ (excluding current collector).

Separately, a liquid electrolyte was prepared by dissolving LiPF$_6$ as a supporting salt at a concentration of 1 mol/L in a mixed solvent in which ethylene carbonate (EC) and diethyl carbonate (DEC) were mixed at a volume ratio of 1 : 2.

The obtained electrode was used as a working electrode and Li metal was used as a counter electrode and reference electrode to fabricate a three-electrode-type beaker cell using the prepared liquid electrolyte, and electrochemical performance thereof were evaluated as described below.

In the present evaluation, since the lithium metal is used as the counter electrode in the three-electrode-type beaker cell for measurement, electrode potentials of the fabricated electrode are more noble with respect to the counter electrode, and thus, operate as positive electrodes. Therefore, the definitions of charging and discharging become opposite when electrodes using the active material of each example are used as a negative electrode. Herein, for the present evaluation, directions in which lithium ions are inserted into the electrode are collectively referred to as charging, and directions of extracting lithium ions from the electrode are consistently referred to as discharging in order to avoid confusion. Incidentally, the active material according to the first approach operate as a negative electrode active material when combined with a known positive electrode material.

The fabricated electrochemical measurement cell was charged and discharged in a potential range of 1.0 V to 3.0 V (vs. Li/Li$^+$) with respect to metallic lithium electrode. A charge/discharge current value was set to 0.2 C (hourly discharge rate), and 0.2 C discharge capacity was examined at room temperature. The value of 0.2 C discharge capacity is an index of energy density.

The Coulomb efficiency associated with charging and discharging during a charge-discharge cycle was measured. Since the Coulomb efficiency at initial charging and discharging is affected by a reaction between the electrode and the electrolyte, the Coulomb efficiency was examined from a charging capacity and a discharging capacity at the tenth cycle at which the charge-discharge cycle becomes stable. Taking the charging capacity at the tenth cycle to be $C_c$ and the discharging capacity at the tenth cycle to be $C_d$, the Coulomb efficiency was determined, taking the Coulomb efficiency as being Cd/Cc × 100%.

Next, to examine the rate performance and cycle life performance of a battery, a nonaqueous electrolyte battery (rated capacity of 1000 mAh) was manufactured by the procedures described below using the active material powder obtained in each example.

(Production of Negative Electrode)

A slurry was obtained by mixing 100 mass% of an active material powder obtained in each example, 10 mass% of acetylene black as an electro-conductive agent, 5 mass% of carbon nanofiber, and 10 mass% of polyvinylidene fluoride (PVdF) as a binder into N-methylpyrrolidone (NMP). This slurry was applied onto both surfaces of a current collector made of an aluminum foil having a thickness of 12 $\mu$m, and then dried in vacuum at 130°C for 12 hours to obtain a stack. Thereafter, the stack was pressed so that the density of the active material-containing layer (excluding the current collector) was 2.4 g/cm$^3$, and a negative electrode was thereby obtained.

(Production of Positive Electrode)

A mixture was obtained by mixing 90 parts by mass of commercial lithium cobaltite (LiCoO$_2$) and 5 parts by mass of acetylene black an electro-conductive agent. Next, this mixture was dispersed in NMP to obtain a fluid dispersion.

PVdF as a binder at the ratio of 5 parts by mass relative to lithium cobaltite was mixed in, to prepare positive electrode slurry. This slurry was applied onto both surfaces of a current collector made of an aluminum foil having a thickness of 12 um, using a blade. This was dried in a vacuum at 130°C for 12 hours to obtain a stack. Thereafter, the stack was pressed so that the density of the active material-containing layer (excluding the current collector) was 2.2 g/cm$^3$, and a positive electrode was obtained.

(Production of Electrode Group)

The positive electrode and negative electrode produced in the above-described manner were stacked with a separator made of polyethylene interposed therebetween, to obtain a stack. Thereafter, the stack was wound and then pressed to obtain a flat-shaped wound electrode group. A positive electrode terminal and a negative electrode terminal were connected to this electrode group.

(Preparation of Nonaqueous Electrolyte)

As a mixed solvent, a mixed solvent of ethylene carbonate and a diethyl carbonate (a volume ratio 1:1) was prepared. Lithium hexafluorophosphate (LiPF$_6$) was dissolved in this solvent at a density of 1 M. A liquid nonaqueous electrolyte was thereby prepared.

(Assembly of Nonaqueous Electrolyte Battery)

The produced electrode group was placed in a battery outer case made of an aluminum laminated film, and a nonaqueous electrolyte was charged into the case. Then, the outer case was sealed by heat sealing, and a nonaqueous electrolyte battery was thus manufactured.

(Charge and Discharge Test)

A discharge rate test was conducted using the obtained laminate-type battery. The charging was performed at 0.2C rate until the cell voltage became 3.0 V, and the charging was finished when the current value equivalent to 0.05C was reached. First, the discharge capacity $C_{0.2}$ at 0.2C rate was measured and then the discharge capacity $C_5$ was measured at 5C rate. The ratio of the 5C discharge capacity to the 0.2C discharge capacity ($C_5/C_{0.2}$) $\times$ 100% was calculated as a 5C discharge capacity retention ratio.

Next, an accelerated life test was conducted at 45°C. The charge and discharge test was conducted to investigate a discharge capacity retention ratio after 500 cycles by repeating the charging and discharging for 500 cycles (a charge and discharge is considered one cycle) within a potential range of 1.5 V to 3.0 V in terms of cell voltage, with the charge and discharge current values at 0.2C (hourly discharge rate). The cycle capacity retention ratio (%) in the case of taking the initial discharge capacity to be 100% was calculated by dividing the discharge capacity after 500 cycles by an initial discharge capacity and multiplying by 100.

The forgoing results are summarized below in Table 1 to Table 3. Table 1 shows a composition of a crystal phase of the niobium-titanium oxide synthesized in each example and a synthesis method for the composition. Table 2 shows a space group to which the niobium-titanium oxide phase in the active material of each example belongs, an octahedron site composed by vertex-sharing only, a valence angle distortion in the octahedron site, a crystallite diameter, and an average diameter size of an active material primary particle ($D_{50}$), which were calculated by the physical properties evaluation. Table 3 shows a 0.2C discharge capacity and a Coulomb efficiency (charge-discharge efficiency) calculated by the electrochemical measurement of the three-electrode beaker cell using the active material of each example, and a 5C charge capacity retention ratio (rate performance) and a cycle capacity retention ratio (life performance) determined from the electrochemical measurement of the laminate-type nonaqueous electrolyte battery using the active material of each example in the negative electrode.

[Table 1]

|  | Crystal phase | Synthesis Method |
|---|---|---|
| Example 1 | Nb$_2$TiO$_7$ | Granulation + thin-film grinding |
| Example 2 | Nb$_2$TiO$_7$ | Solid-phase reaction |
| Example 3 | Nb$_2$TiO$_7$ | Solid-phase reaction + thin-film grinding |
| Example 4 | Nb$_2$TiO$_7$ | Sol-gel liquid phase method |

(continued)

| | Crystal phase | Synthesis Method |
|---|---|---|
| Example 5 | $Nb_2TiO_7$ | Sol-gel liquid phase method + thin-film grinding |
| Example 6 | $Nb_{1.99}Ta_{0.005}P_{0.005}TiO_7$ | Granulation + thin-film grinding |
| Example 7 | $Nb_{1.97}Ta_{0.01}V_{0.01}Y_{0.01}TiO_7$ | Granulation + thin-film grinding |
| Example 8 | $Nb_2Ti_{0.9}Zr_{0.05}Sn_{0.05}O_7$ | Granulation + thin-film grinding |
| Example 9 | $Nb_{1.97}K_{0.03}Ti_{0.93}MO_{0.04}W_{0.03}O_7$ | Granulation + thin-film grinding |
| Example 10 | $Nb_{1.7}Mo_{0.3}Ti_{0.7}Cr_{0.7}Fe_{0.1}Al_{0.1}O_7$ | Granulation + thin-film grinding |
| Example 11 | $Nb_{1.7}Mo_{0.3}Ti_{0.7}Mn_{0.05}Ni_{0.05}Y_{0.1}Co_{0.1}O_7$ | Granulation + thin-film grinding |
| Example 12 | $Nb_{10}Ti_2O_{29}$ | Granulation + thin-film grinding |
| Comparative Example 1 | $Nb_2TiO_7$ | Solid-phase reaction + dry grinding |
| Comparative Example 2 | $Nb_2TiO_7$ | Granulation + dry grinding |
| Comparative Example 3 | $Nb_2TiO_7$ | Sol-gel liquid phase method |
| Comparative Example 4 | $Nb_2TiO_7$ | Sol-gel liquid phase method + dry grinding |

[Table 2]

| | Space Group | Octahedron site with vertex-sharing only | Bond angle distortion of the site given in the left column ($\sigma^2$/deg$^2$) | Crystallite diameter (nm) | Average particle size $D_{50}$ ($\mu$m) |
|---|---|---|---|---|---|
| Example 1 | $C2/m$ | $2a$ | 0.006 | 105 | 1.21 |
| Example 2 | $C2/m$ | $2a$ | 0.002 | 128 | 8.86 |
| Example 3 | $C2/m$ | $2a$ | 0.007 | 120 | 6.75 |
| Example 4 | $C2/m$ | $2a$ | 0.001 | 88 | 2.05 |
| Example 5 | $C2/m$ | $2a$ | 0.005 | 85 | 0.95 |
| Example 6 | $C2/m$ | $2a$ | 0.199 | 101 | 1.98 |
| Example 7 | $C2/m$ | $2a$ | 0.235 | 108 | 2.34 |
| Example 8 | $C2/m$ | $2a$ | 0.541 | 110 | 2.55 |
| Example 9 | $C2/m$ | $2a$ | 0.489 | 106 | 3.18 |
| Example 10 | $C2/m$ | $2a$ | 0.569 | 104 | 2.98 |
| Example 11 | $C2/m$ | $2a$ | 0.797 | 103 | 3.34 |
| Example 12 | $A2/m$ | $4i$ | 0.018 | 98 | 2.01 |
| Comparative Example 1 | $C2/m$ | $2a$ | 0.883 | 98 | 1.62 |
| Comparative Example 2 | $C2/m$ | $2a$ | 0.812 | 96 | 1.35 |
| Comparative Example 3 | $C2/m$ | $2a$ | 0.008 | 75 | 0.65 |
| Comparative Example 4 | $C2/m$ | $2a$ | 0.805 | 68 | 0.28 |

[Table 3]

| | Beaker Cell | | Nonaqueous Electrolyte Battery | |
|---|---|---|---|---|
| | 0.2C Discharge Capacity (mAh/g) | Coulomb Efficiency (%) | 5C Discharge Capacity Retention Ratio (%) | Cycle Capacity Retention Ratio (%) |
| Example 1 | 273 | 99.8 | 92.1 | 92.5 |
| Example 2 | 271 | 99.8 | 88.5 | 84.9 |
| Example 3 | 269 | 99.7 | 89.2 | 83.6 |
| Example 4 | 275 | 89.5 | 91.9 | 84.2 |
| Example 5 | 273 | 88.8 | 94.3 | 82.8 |
| Example 6 | 275 | 99.7 | 93.5 | 91.2 |
| Example 7 | 274 | 99.6 | 93.8 | 89.8 |
| Example 8 | 273 | 99.4 | 93.1 | 89.5 |
| Example 9 | 274 | 99.5 | 93.5 | 90.3 |
| Example 10 | 268 | 99.3 | 94.1 | 89.6 |
| Example 11 | 269 | 99.3 | 93.7 | 90.4 |
| Example 12 | 271 | 99.8 | 93.4 | 91.9 |
| Comparative Example 1 | 270 | 86.7 | 90.5 | 75.4 |
| Comparative Example 2 | 269 | 85.3 | 91.3 | 78.1 |
| Comparative Example 3 | 260 | 81.2 | 87.8 | 63.5 |
| Comparative Example 4 | 258 | 80.8 | 89.3 | 60.4 |

The niobium-titanium oxide phase included in the active material synthesized in each example had included at least one octahedron site composed only with vertex-sharing per unit lattice, as shown in Table 2. In the active material of each of Examples 1 to 12, the bond angle distortion of the octahedron site had been kept to 0.8 $\sigma^2$/deg$^2$ or less, and the crystallite diameter of the niobium-titanium oxide phase was 85 nm. In contrast, in Comparative Examples 1, 2, and 4, the bond angle distortion of the octahedron site only having vertex-sharing had exceeded 0.8 $\sigma^2$/deg$^2$, and in Comparative Example 3, the crystallite diameter of the niobium-titanium oxide phase was less than 85 nm. The beaker cell using the active material of each example exhibited a comparable discharge capacity at low rate (0.2C) as shown in Table 3, and the capacity retention ratio in high-rate (50C) discharging of a nonaqueous electrolyte battery using the active material of each example was also comparable. However, the Coulomb efficiency of the beaker cell and a cycle capacity retention ratio of the nonaqueous electrolyte battery were superior in the measurement cell using the active material of each of Examples 1 to 12, as compared to the cell using the active material of each of Comparative Examples 1 to 4.

According to at least one approach and example described above, an active material is provided. The active material includes a niobium-titanium oxide phase having a monoclinic structure that includes at least one (Nb, Ti)O$_6$ octahedron site composed only with vertex-sharing for which a bond angle distortion of 0.8 $\sigma^2$/deg$^2$ or less, per unit lattice. The crystallite diameter of the niobium-titanium oxide phase is within a range of 85 nm to 130 nm. The active material can realize a secondary battery exhibiting excellent charge-discharge efficiency and cycle life performance.

The present disclosure also encompasses the following approaches of active materials:

1. An active material comprising a niobium-titanium oxide phase having a monoclinic structure,

the niobium-titanium oxide phase having a crystal structure that includes in a crystal lattice thereof, at least one per unit lattice of a (Nb, Ti)$O_6$ octahedron site composed only with vertex-sharing a bond angle distortion in the octahedron site being 0.8 $\sigma^2$/deg$^2$ or less, and
a crystallite diameter of the niobium-titanium oxide phase being in a range from 85 nm or greater to 130 nm or less.

2. The active material according to clause 1, wherein the active material comprises primary particles of the niobium-titanium oxide phase, and
an average particle size $D_{50}$ of the primary particles falls within a range from 0.1 $\mu$m or greater and 10 $\mu$m or less.
3. The active material according to clause 1 or 2,
wherein the niobium-titanium oxide phase contains at least one phase selected from the group consisting of $Nb_2TiO_7$ phase and $Nb_{10}Ti_2O_{29}$ phase.
4. The active material according to clause 3, wherein the at least one phase contains at least one selected from a group consisting of K, Zr, Sn, V, Ta, Mo, W, P, Y, Fe, Co, Cr, Mn, Ni, and Al.
5. The active material according to any one of clauses 1 to 4, wherein the niobium-titanium oxide phase has a monoclinic crystal structure belonging to a space group C2/m, and a bond angle distortion is 0.8 $\sigma^2$/deg$^2$ or less in a 2a site according to symmetry described in International Tables, volume A, in the monoclinic crystal structure.
6. An electrode comprising the active material according to any one of clauses 1 to 5.
7. The electrode according to clause 6, further comprising an active material-containing layer, the active material-containing layer comprising the active material.
8. A secondary battery comprising:

   a positive electrode;
   a negative electrode; and
   an electrolyte,
   the negative electrode comprising the electrode according to claim 6 or 7.

9. A battery pack comprising the secondary battery according to claim 8.
10. The battery pack according to clause 9, further comprising:

   an external power distribution terminal; and
   a protective circuit.

11. The battery pack according to clause 9 or 10, comprising plural of the secondary battery, the secondary batteries being electrically connected in series, in parallel, or in combination of in-series connection and in-parallel connection.
12. A vehicle comprising the battery pack according to any one of clauses 9 to 11.
13. The vehicle according to clause 12, wherein the vehicle comprises a mechanism configured to convert kinetic energy of the vehicle into regenerative energy.

While certain approaches have been described, these approaches have been presented by way of example only, and are not intended to limit the scope of the claims. Indeed, the novel active materials described herein may be embodied in a variety of other forms; furthermore, various omissions, substitutions and changes in the form of the active materials described herein may be made.

## Claims

1. An active material comprising a niobium-titanium oxide phase having a monoclinic structure,

   the niobium-titanium oxide phase having a crystal structure that includes in a crystal lattice thereof, at least one per unit lattice of a (Nb, Ti)$O_6$ octahedron site composed only with vertex-sharing a bond angle distortion in the octahedron site being 0.8 $\sigma^2$/deg$^2$ or less, and
   a crystallite diameter of the niobium-titanium oxide phase being in a range from 85 nm or greater to 130 nm or less.

2. The active material according to claim 1, wherein the active material comprises primary particles of the niobium-titanium oxide phase, and
an average particle size Dso of the primary particles falls within a range from 0.1 um or greater and 10 um or less.

3. The active material according to claim 1 or 2, wherein the niobium-titanium oxide phase contains at least one phase selected from the group consisting of $Nb_2TiO_7$ phase and $Nb_{10}Ti_2O_{29}$ phase.

4.  The active material according to claim 3, wherein the at least one phase contains at least one selected from a group consisting of K, Zr, Sn, V, Ta, Mo, W, P, Y, Fe, Co, Cr, Mn, Ni, and Al.

5.  The active material according to any one of claims 1 to 4, wherein the niobium-titanium oxide phase has a monoclinic crystal structure belonging to a space group C2/m, and a bond angle distortion is 0.8 $\sigma^2/deg^2$ or less in a 2a site according to symmetry described in International Tables, volume A, in the monoclinic crystal structure.

6.  An electrode comprising the active material according to any one of claims 1 to 5.

7.  The electrode according to claim 6, further comprising an active material-containing layer, the active material-containing layer comprising the active material.

8.  A secondary battery (100) comprising:

    a positive electrode (5);
    a negative electrode (3); and
    an electrolyte,
    the negative electrode (3) comprising the electrode according to claim 6 or 7.

9.  A battery pack (300) comprising the secondary battery (100) according to claim 8.

10. The battery pack (300) according to claim 9, further comprising:

    an external power distribution terminal (350); and
    a protective circuit (346).

11. The battery pack (300) according to claim 9 or 10, comprising plural of the secondary battery (100), the secondary batteries (100) being electrically connected in series, in parallel, or in combination of in-series connection and in-parallel connection.

12. A vehicle (400) comprising the battery pack (300) according to any one of claims 9 to 11.

13. The vehicle (400) according to claim 12, wherein the vehicle comprises a mechanism configured to convert kinetic energy of the vehicle (400) into regenerative energy.

F I G. 1

F I G. 2

F I G. 3

F I G. 4

FIG. 5

FIG. 6

FIG. 7

F I G. 8

F I G. 9

F I G. 10

F I G. 11

F I G. 12

F I G. 13

# EUROPEAN SEARCH REPORT

Europäisches
Patentamt
European
Patent Office
Office européen
des brevets

Application Number

EP 23 19 4174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 544 094 A1 (TOSHIBA KK [JP]; TOSHIBA INFRASTRUCTURE SYSTEMS & SOLUTIONS CORP [JP]) 25 September 2019 (2019-09-25) | 1-13 | INV. H01M4/485 H01M4/131 |
| Y | * paragraphs [0020] – [0022], [0035] – [0039]; claims 1-10; figures 1-13; examples 1-4,5a-5e,6-20; tables 1-3 * | 2,4,6-13 | H01M4/1391 H01M10/0525 H01M4/04 H01M4/505 |
| X | WO 2012/016185 A2 (UNIV TEXAS [US]; GOODENOUGH JOHN B [US]; HAN JIAN-TAO [US]) 2 February 2012 (2012-02-02) | 1,3,5 | C01G33/00 |
| Y | * claims 1-19; figures 1(a)-1(d),2; examples 1-9 * | 2,4,6-13 | ADD. H01M4/02 |

TECHNICAL FIELDS
SEARCHED      (IPC)

H01M
C01G

The present search report has been drawn up for all claims

| Place of search | Date of completion of the search | Examiner |
|---|---|---|
| Munich | 12 February 2024 | Bonneau, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 4174**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-02-2024**

| Patent document cited in search report | | Publication date | Patent family member(s) | | Publication date |
|---|---|---|---|---|---|
| EP 3544094 | A1 | 25-09-2019 | CN | 110299534 A | 01-10-2019 |
| | | | EP | 3544094 A1 | 25-09-2019 |
| | | | JP | 6892407 B2 | 23-06-2021 |
| | | | JP | 2019169348 A | 03-10-2019 |
| | | | US | 2019296345 A1 | 26-09-2019 |
| WO 2012016185 | A2 | 02-02-2012 | CA | 2810191 A1 | 02-02-2012 |
| | | | CN | 103081187 A | 01-05-2013 |
| | | | EP | 2599146 A2 | 05-06-2013 |
| | | | JP | 2013535787 A | 12-09-2013 |
| | | | KR | 20130096258 A | 29-08-2013 |
| | | | US | 2012052401 A1 | 01-03-2012 |
| | | | WO | 2012016185 A2 | 02-02-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- International Tables for Crystallography. Space-group symmetry. 2016, vol. A

- *Chem. Mater.,* 2011, vol. 23 (8), 2027-2029